# EUROPÄISCHE PATENTSCHRIFT

(11) **EP 2 566 756 B1**
(45) Veröffentlichungstag und Bekanntmachung des Hinweises auf die Patenterteilung: **06.12.2017**
(21) Anmeldenummer: 11722306.5
(22) Anmeldetag: 03.05.2011
(51) Int. Cl.: B64D 11/06, B65G 47/08, B65G 47/91

(54) **SITZANORDNUNG EINER PASSAGIERKABINE**
AGENCEMENT DE SIÈGE POUR UNE CABINE DE PASSAGER
SEAT ARRANGEMENT IN A PASSENGER CABIN

(30) Priorität: 04.05.2010 DE 102010019192
(43) Veröffentlichungstag der Anmeldung: 13.03.2013
(73) Patentinhaber: Recaro Aircraft Seating GmbH & Co. KG, 74523 Schwäbisch Hall (DE)
(72) Erfinder: KO, Djunianto, 74523 Schwäbisch Hall (DE)
(74) Vertreter: Daub, Thomas
(86) Internationale Anmeldenummer: PCT/EP2011/002195
(87) Internationale Veröffentlichungsnummer: WO 2011/141134

(56) Entgegenhaltungen:
- WO-A1-2005/014395
- WO-A1-2007/003889
- WO-A1-2009/073244
- US-A1- 2010 065 684

## Beschreibung

### Stand der Technik

Die Erfindung geht aus von einer Sitzanordnung nach dem Oberbegriff des Patentanspruchs 1.

Es sind bereits Sitzanordnungen in Passagierkabinen mit einer Vielzahl von Sitzgruppen mit jeweils drei parallel nebeneinander angeordneten Sitzen bekannt. Bei dieser Sitzanordnung sind Passagiere, die von einem Kabinengang entfernt sitzen, gezwungen, an benachbarten Sitzen vorbeizugehen beziehungsweise über sie hinwegzusteigen. Dies ist hinsichtlich einer Komfortanforderung seitens der Passagiere nicht zufriedenstellend.

Aus der WO 2007/003889 A1 ist bereits eine Sitzanordnung einer Passagierkabine, mit zumindest zwei Sitzgruppen, wobei die zumindest zwei Sitzgruppen zwischen zwei zu einer Längsrichtung der Passagierkabine parallel verlaufenden Kabinengängen hintereinander angeordnet sind und jeweils zwei äußere Sitzeinheiten und genau eine mittlere Sitzeinheit aufweisen, wobei die Sitzeinheiten in einer Sitzkonfiguration eingestellt sind, wobei eine mittlere Sitzeinheit zumindest einer der zumindest zwei Sitzgruppen zu zumindest einer der äußeren Sitzeinheiten derselben Sitzgruppe in Längsrichtung der Passagierkabine versetzt angeordnet ist, wodurch jede Sitzeinheit einen hindernisfreien Zugang zu zumindest einem Kabinengang aufweist, wobei zumindest eine der Sitzeinheiten in einer Sitzrichtung gegenüber der Längsrichtung der Passagierkabine gedreht ist, bekannt. Die WO 2007/003889 A1 weist den Nachteil auf, dass mittels der gezeigten Ausgestaltung keine zu einer Liegefläche ausfahrbaren Sitzeinheiten verwirklicht werden können, bei denen trotzdem von der mittleren Sitzeinheit ein hindernisfreier Zugang zu einem Kabinengang gegeben ist.

Der Erfindung liegt daher die Aufgabe zugrunde, den Komfort in einer Passagierkabine, bei gleichzeitiger Erfüllung bestehender Sicherheitsanforderungen, zu erhöhen, und insbesondere auch eine kompakte Anordnung von Sitzreihen in einer Flugzeugkabine bereitzustellen.

Diese Aufgabe wird durch eine Sitzanordnung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzanordnung einer Passagierkabine, mit zumindest zwei Sitzgruppen, wobei die zumindest zwei Sitzgruppen zwischen zwei zu einer Längsrichtung der Passagierkabine parallel verlaufenden Kabinengängen hintereinander angeordnet sind und jeweils zwei äußere Sitzeinheiten und genau eine mittlere Sitzeinheit aufweisen, wobei die Sitzeinheiten in einer Sitzkonfiguration eingestellt sind, wobei eine mittlere Sitzeinheit zumindest einer der zumindest zwei Sitzgruppen zu zumindest einer der äußeren Sitzeinheiten derselben Sitzgruppe in Längsrichtung der Passagierkabine versetzt angeordnet ist, wodurch jede Sitzeinheit einen hindernisfreien Zugang zu zumindest einem Kabinengang aufweist, wobei zumindest eine der Sitzeinheiten in einer Sitzrichtung gegenüber der Längsrichtung der Passagierkabine gedreht ist.

Es wird vorgeschlagen, dass zumindest eine senkrecht zur Längsrichtung der Passagierkabine angeordnete Ebene die zumindest zwei Sitzgruppen schneidet, wodurch eine besonders vorteilhafte dichte Anordnung der Sitzgruppen zueinander und damit eine optimale Raumnutzung erreicht werden kann. Unter einer "Längsrichtung der Passagierkabine" soll dabei insbesondere eine Haupterstreckungsrichtung der Passagierkabine verstanden werden, die sich parallel zu einer Kabinenmittellängsachse erstreckt und im Wesentlichen in eine Fortbewegungsrichtung der Passagierkabine zeigt. Unter einem "Kabinengang" soll in einer Sitzanordnung ein Raum verstanden werden, welcher zu einer Bewegung von Passagieren innerhalb der Sitzanordnung, z.B. um sich zu einer zugewiesenen Sitzeinheit zu begeben, vorgesehen ist. Unter "parallel verlaufenden Kabinengängen" sollen dabei insbesondere Kabinengänge verstanden werden, deren Haupterstreckungsrichtungen parallel zueinander verlaufen. Unter "hintereinander" soll in diesem Zusammenhang insbesondere entgegen der Längsrichtung der Passagierkabine verstanden werden. Ferner sollen sich in der folgenden Beschreibung die Begriffe "vor", "vorne", "hinten", "rückwärtig", "Frontseite", "Vorderseite", "Rückseite" usw. auf die Längsrichtung der Passagierkabine beziehen. Darüber hinaus beziehen sich die Begriffe "oben", "unten", "oberhalb", "unterhalb" usw. auf eine vertikale Richtung, die senkrecht zu einem Kabinenboden der Passagierkabine ausgerichtet ist und von diesem ausgeht. Unter "hindernisfrei" soll in diesem Zusammenhang insbesondere eine freie Durchgangsbreite von mindestens 30 cm, bevorzugt 50 cm und besonders bevorzugt 70 cm verstanden werden. Durch diese Sitzanordnung kann ein die Sitzeinheit nutzender Passagier auf einer Sitzeinheit, unabhängig von einem Sitznachbarn des Passagiers und dessen Sitz- oder Liegekonfiguration, den Kabinengang jederzeit auf einfache und komfortable Weise erreichen. Eine Beeinträchtigung oder Störung eines anderen Passagiers kann dabei vorteilhaft vermieden werden. Des Weiteren kann eine Evakuierungszeit im Notfall vorteilhaft verkürzt werden. Um wegen eines versperrten Kabinengangs von einem Kabinengang zum anderen Kabinengang zu wechseln, kann vorteilhaft eine mittlere Sitzeinheit als Durchgang genutzt und damit eine sonst übliche längere Wegstrecke vermieden werden. Ein Passagier auf einer mittleren Sitzeinheit kann besonders vorteilhaft beide Kabinengänge hindernisfrei erreichen. Ferner ist jede Sitzeinheit für in ihrer Bewegung eingeschränkte Passagiere auf einfache Weise zu erreichen.

In einer vorteilhaften Ausgestaltung der Erfindung wird vorgeschlagen, dass die Sitzrichtungen der äußeren Sitzeinheiten mit der Längsrichtung der Passagierkabine einen Winkel (W2) von 5° einschließen. Unter einer "Sitzrichtung" soll in diesem Zusammenhang insbesondere eine Richtung verstanden werden, die bei einer senkrecht zu einem Kabinenboden stehenden Rückenlehne einer Sitzeinheit durch eine senkrecht von einer Hauptabstützfläche der Rückenlehne ausgehende Achse vorgegeben ist.

Weiter wird vorgeschlagen, dass die mittleren Sitzeinheiten in ihrer Sitzrichtung parallel zu der Längsrichtung der Passagierkabine ausgerichtet sind, wodurch die Sitzgruppen besonders vorteilhaft ausgebildet werden können.

Ferner wird vorgeschlagen, dass die Anzahl von quer zur Längsrichtung der Passagierkabine verlaufenden Verbindungsgängen zwischen den Kabinengängen mindestens so groß ist wie die Anzahl der sich in einer Sitzkonfiguration befindlichen mittleren Sitzeinheiten, wodurch eine Vielzahl von Verbindungsgängen und damit zusätzlicher Komfort für die Passagiere geschaffen werden kann. Unter einem "Verbindungsgang" soll dabei insbesondere ein hindernisfreier Durchgang von einem Kabinengang zu dem anderen Kabinengang verstanden werden.

Weist zumindest eine der zumindest zwei Sitzgruppen zumindest eine Umhausungseinheit auf, die dazu vorgesehen ist, die Sitzeinheiten der jeweiligen Sitzgruppe zumindest rückwärtig abzuschirmen, kann unerwünschter Blickkontakt vorteilhaft vermieden und eine als besonders privat empfundene Umgebung geschaffen werden. Unter einer "Umhausungseinheit" soll in diesem Zusammenhang insbesondere eine Einheit verstanden werden, die dazu vorgesehen ist, einen Passagier vor Blicken fremder Passagiere abzuschirmen.

Des Weiteren wird vorgeschlagen, dass zumindest zwei der Sitzeinheiten einer der zumindest zwei Sitzgruppen von der zumindest einen Umhausungseinheit zumindest teilweise umgeben sind, wodurch eine Abschirmung vor Blicken besonders einfach und kostengünstig hergestellt werden kann

In einer weiteren Ausgestaltung der Erfindung wird vorgeschlagen, dass die zumindest eine Umhausungseinheit einstückig ausgebildet ist, wodurch die Abschirmung vor Blicken besonders einfach und kostengünstig montiert werden kann. Besonders bevorzugt kann die Umhausungseinheit aus einem Kunststoffmaterial hergestellt werden.

Weist zumindest eine der Sitzeinheiten eine Fußauflageeinheit auf, kann ein zusätzlicher Komfort für einen Passagier erreicht werden. Unter einer "Fußauflageeinheit" soll in diesem Zusammenhang eine Einheit verstanden werden, die dazu vorgesehen ist, eine Fußauflagefläche bereitzustellen. Besonders bevorzugt kann es sich dabei um eine Ottomane handeln.

In einer weiteren Ausgestaltung der Erfindung wird vorgeschlagen, dass die Fußauflageeinheit eine Verstaueinheit aufweist, wodurch zusätzlicher Stauraum für Gepäckstücke, Zeitschriften etc. geschaffen werden kann.

Des Weiteren wird zumindest eine Sitzeinheit vorgeschlagen, die von einer Sitzkonfiguration in eine Liegekonfiguration und umgekehrt verstellbar ist, wodurch der Komfort bei Beibehaltung des ungehinderten Zugangs zu einem Kabinengang gesteigert werden kann. Besonders vorteilhaft beträgt in der Liegekonfiguration ein Abstand eines Beinauflageelements der zumindest einen Sitzeinheit von der Fußauflageeinheit weniger als 5 cm.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Sitzanordnung einer Flugzeug-kabine mit Sitzgruppen und Sitzeinheiten und
- Fig. 2: eine schematische Darstellung zweier Sitzgruppen.

### Beschreibung des Ausführungsbeispiels

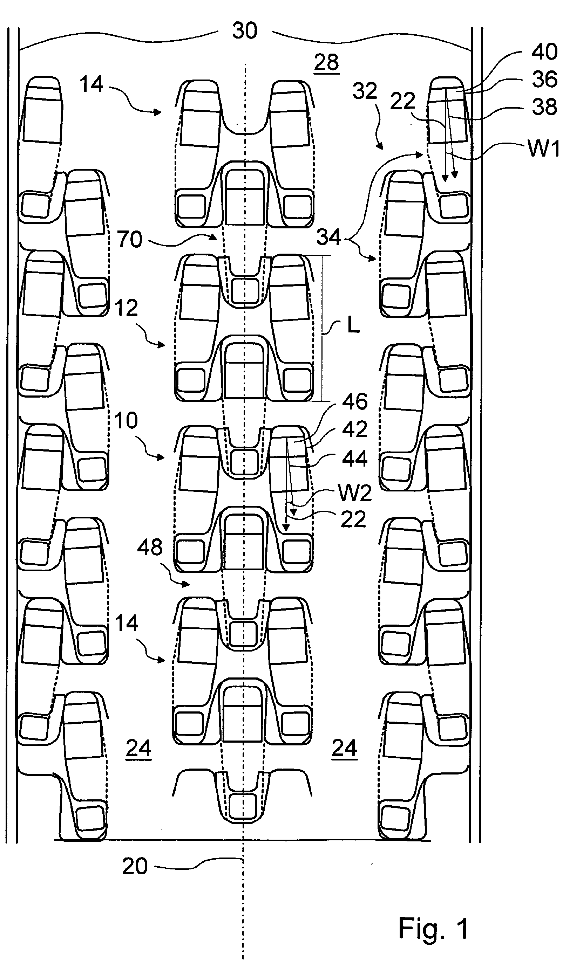

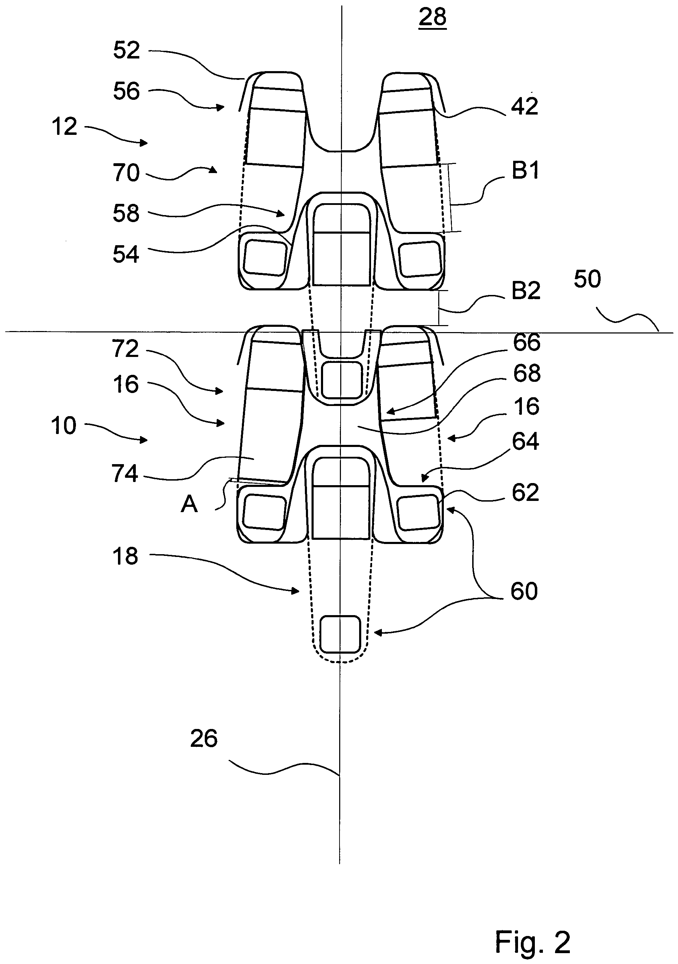

Figur 1 zeigt eine schematische Darstellung einer Sitzanordnung in einer Flugzeugkabine mit einer ersten Sitzgruppe 10, einer zweiten Sitzgruppe 12 und weiteren Sitzgruppen 14, wobei die Sitzgruppen 10, 12 und 14 zwischen zwei zu einer Längsrichtung 22 der Passagierkabine parallel verlaufenden Kabinengängen 24, 24' hintereinander angeordnet sind und jeweils zwei äußere Sitzeinheiten 16 und eine mittlere Sitzeinheit 18 aufweisen (Fig. 2). Die mittleren Sitzeinheiten 18 sind auf einer Kabinenmittellängsachse 20 angeordnet. Die Kabinenmittellängsachse 20 verläuft parallel zur Längsrichtung 22 der Passagierkabine. Die einzelnen Sitzgruppen 10, 12 und 14 sind zentral auf der Kabinenmittellängsachse 20 angeordnet.

Des Weiteren zeigt Figur 2, dass die äußeren Sitzeinheiten 16 zu einer Ebene 26, die senkrecht auf einem Kabinenboden 28 steht und entlang der Kabinenmittellängsachse 20 verläuft, spiegelsymmetrisch angeordnet sind.

Ferner sind, wie in Figur 1 gezeigt, an einer Kabinenaußenwand 30 äußere Sitzgruppen 32 mit jeweils zwei Sitzeinheiten 34 angeordnet. Die Sitzeinheiten 34 weisen jeweils eine Rückenlehne 36 auf. Bei einer senkrecht zum Kabinenboden 28 stehenden Rückenlehne 36 einer der zwei Sitzeinheiten 34 ist eine Sitzrichtung 38 durch eine senkrecht zu einer Hauptabstützfläche 40 der Rückenlehne 36 stehende Achse vorgegeben. Die Sitzrichtungen 38 der Sitzeinheiten 34, 36 der äußeren Sitzgruppen 32 sind gegenüber der Längsrichtung 22 der Passagierkabine gedreht und schließen mit ihr einen Winkel W1 von 5° ein.

Die jeweils mittleren Sitzeinheiten 18 der Sitzgruppen 10, 12 und 14 sind zu den äußeren Sitzeinheiten 16 derselben Sitzgruppe 10, 12 und 14 in Längsrichtung 22 der Passagierkabine um eine halbe Sitzeinheitslänge L verschoben und somit versetzt angeordnet. Wie in Figur 2 gezeigt, weisen die äußeren Sitzeinheiten 16 einen hindernisfreien Zugang mit einer Durchgangsbreite B1 von 80 cm zu einem der zwei Kabinengänge 24, 24' auf. Jede mittlere Sitzeinheit 18 weist einen hindernisfreien Zugang mit einer Durchgangsbreite B2 von 50 cm zu beiden Kabinengängen 24, 24' auf.

Die Sitzeinheiten 16, 18 weisen jeweils eine verstellbare Rückenlehne 42 auf. Bei einer senkrecht zum Kabinenboden 28 stehenden Rückenlehne 42 einer der äußeren Sitzeinheiten 16 ist, wie in Figur 1 gezeigt, eine Sitzrichtung 44 durch eine senkrecht zu einer Hauptabstützfläche 46 der Rückenlehne 42 stehende Achse vorgegeben. Die Sitzrichtungen 44 der äußeren Sitzeinheiten 16 der Sitzgruppen 10, 12 und 14 sind gegenüber der Längsrichtung 22 der Passagierkabine gedreht. Sie schließen mit ihr einen Winkel W2 von 5° ein. Die Rückenlehne 42 lässt sich innerhalb eines Rückenlehnenbereichs 56 verstellen. Die mittleren Sitzeinheiten 18 sind in ihrer Sitzrichtung 44 parallel zur Längsrichtung 22 der Passagierkabine ausgerichtet.

In der Figur 1 sind ferner die mittleren Sitzeinheiten 18 in einer Sitzkonfiguration 70 dargestellt. Die Anzahl von quer zur Längsrichtung 22 der Passagierkabine verlaufenden Verbindungsgängen 48 zwischen den Kabinengängen 24, 24' ist so groß wie die Anzahl der sich in der Sitzkonfiguration 70 befindlichen mittleren Sitzeinheiten 18.

Wie weiterhin in Figur 2 gezeigt, ist die mittlere Sitzeinheit 18 der zweiten Sitzgruppe 12, quer zur Längsrichtung 22 der Passagierkabine betrachtet, mit den äußeren Sitzeinheiten 16 der ersten Sitzgruppe 10 überlappend angeordnet. Eine gedachte, senkrecht zur Längsrichtung 22 der Passagierkabine angeordnete Ebene 50 schneidet sowohl die erste Sitzgruppe 10 als auch die zweite Sitzgruppe 12.

Des Weiteren weist jede Sitzgruppe 10, 12 und 14 eine hintere Umhausungseinheit 52 und eine mittlere Umhausungseinheit 54 auf. Die hintere Umhausungseinheit 52 ist rückwärtig hinter den äußeren Sitzeinheiten 16 angeordnet und erstreckt sich von einem Kabinengang 24 zu dem anderen Kabinengang 24'. Somit sind beide äußeren Sitzeinheiten 16 rückwärtig abgeschirmt. Die mittlere Umhausungseinheit 54 befindet sich teilweise vor den äußeren Sitzeinheiten 16, teilweise hinter der mittleren Sitzeinheit 18 und erstreckt sich ebenfalls von einem Kabinengang 24 zu dem anderen Kabinengang 24'.

Die hinteren Umhausungseinheiten 52 sowie die mittleren Umhausungseinheiten 54 sind ortsfest am Kabinenboden 28 angeordnet. Eine Verstellung der Rückenlehnen 42 der Sitzeinheiten 16, 18 erfolgt in Längsrichtung 22 der Passagierkabine, gesehen vor den jeweiligen Umhausungseinheiten 52, 54.

Die hintere Umhausungseinheit 52 umgibt jeweils einen Rückenlehnenbereich 56 der äußeren Sitzeinheiten 16 der Sitzgruppen 10, 12 und 14. Die mittlere Umhausungseinheit 54 umgibt einen Rückenlehnenbereich 58 der mittleren Sitzeinheit 18. Die Umhausungseinheiten 52, 54 sind jeweils einstückig aus einem schlagfesten Kunststoffmaterial gebildet.

Wie Figur 2 weiter zeigt, weisen die Sitzeinheiten 16, 18 jeweils eine Fußauflageeinheit 60 auf. Die Fußauflageeinheit 60 besteht aus einer Ottomane und schließt einen vordersten Teil der jeweiligen Sitzeinheit 16, 18 ab. Die äußere Form der Ottomane entspricht im Wesentlichen der eines Würfels. Eine Würfelkante 62 des Würfels ist dabei parallel zur Sitzrichtung 44 der jeweiligen Sitzeinheit 16, 18 angeordnet.

Ferner weist jede Fußauflageeinheit 60 eine Verstaueinheit 64 auf. Die Verstaueinheit 64 ist als Ausnehmung in der Ottomane ausgebildet, in welcher insbesondere persönliche Gegenstände oder Handgepäck verstaut werden können.

Figur 2 zeigt darüber hinaus hinter den mittleren Sitzeinheiten 18 der Sitzgruppen 10, 12 und 14, in deren Sitzrichtung gesehen, eine Ablageeinheit 66, die eine Ablagefläche 68 aufweist. Die Ablagefläche 68 schließt an den äußeren Sitzeinheiten 16 der jeweiligen Sitzgruppen 10, 12 und 14 bündig ab.

Die Sitzeinheiten 16, 18 der Sitzgruppen 10 und 12 sind, wie in Figur 2 dargestellt, von einer Sitzkonfiguration 70 in eine Liegekonfiguration 72 und umgekehrt verstellbar. In der Liegekonfiguration 72 beträgt ein Abstand A eines Beinauflageelements 74 der jeweiligen Sitzeinheit 16, 18 und der Fußauflageeinheit 60 ca. drei Zentimeter.

**Bezugszeichen**

| | | | |
|---|---|---|---|
| 10 | Sitzgruppe | 56 | Rückenlehnenbereich |
| 12 | Sitzgruppe | 58 | Rückenlehnenbereich |
| 14 | Sitzgruppe | 60 | Fußauflageeinheit |
| 16 | Sitzeinheit | 62 | Würfelkante |
| 18 | Sitzeinheit | 64 | Verstaueinheit |
| 20 | Kabinenmittellängsachse | 66 | Ablageeinheit |
| 22 | Längsrichtung | 68 | Ablagefläche |
| 24 | Kabinengang | 70 | Sitzkonfiguration |
| 26 | Ebene | 72 | Liegekonfiguration |
| 28 | Kabinenboden | 74 | Beinauflageelement |
| 30 | Kabinenaußenwand | A | Abstand |
| 32 | Sitzgruppe | B1 | Durchgangsbreite |
| 34 | Sitzeinheit | B2 | Durchgangsbreite |
| 36 | Rückenlehne | L | Sitzeinheitslänge |
| 38 | Sitzrichtung | W1 | Winkel |
| 40 | Hauptabstützfläche | W2 | Winkel |
| 42 | Rückenlehne | | |
| 44 | Sitzrichtung | | |
| 46 | Hauptabstützfläche | | |
| 48 | Verbindungsgang | | |
| 50 | Ebene | | |
| 52 | Umhausungseinheit | | |
| 54 | Umhausungseinheit | | |

## Patentansprüche

1. Sitzanordnung einer Passagierkabine, mit zumindest zwei Sitzgruppen (10, 12), wobei die zumindest zwei Sitzgruppen (10, 12) zwischen zwei zu einer Längsrichtung (22) der Passagierkabine parallel verlaufenden Kabinengängen (24) hintereinander angeordnet sind und jeweils zwei äußere Sitzeinheiten (16) und genau eine mittlere Sitzeinheit (18) aufweisen, wobei die Sitzeinheiten (16, 18) in einer Sitzkonfiguration (70) eingestellt sind, wobei eine mittlere Sitzeinheit (18) zumindest einer der zumindest zwei Sitzgruppen (10, 12) zu zumindest einer der äußeren Sitzeinheiten (16) derselben Sitzgruppe (10, 12) in Längsrichtung (22) der Passagierkabine versetzt angeordnet ist, wodurch jede Sitzeinheit (16, 18) einen hindernisfreien Zugang zu zumindest einem Kabinengang (24) aufweist, wobei zumindest eine der Sitzeinheiten (16, 18) in einer Sitzrichtung (44) gegenüber der Längsrichtung (22) der Passagierkabine gedreht ist **dadurch gekennzeichnet, dass** zumindest eine senkrecht zur Längsrichtung (22) der Passagierkabine angeordnete Ebene (50) die zumindest zwei Sitzgruppen (10, 12) schneidet.

2. Sitzanordnung nach Anspruch 1, **dadurch gekennzeichnet, dass** die Sitzrichtungen (44) der äußeren Sitzeinheiten (16) mit der Längsrichtung (22) der Passagierkabine einen Winkel (W2) von 5° einschließen.

3. Sitzanordnung nach Anspruch 1 oder 2, **dadurch gekennzeichnet, dass** die mittleren Sitzeinheiten (18) in ihrer Sitzrichtung (44) parallel zu der Längsrichtung (22) der Passagierkabine ausgerichtet sind.

4. Sitzanordnung nach einem der vorhergehenden Ansprüche, **dadurch gekennzeichnet, dass** die Anzahl von quer zur Längsrichtung (22) der Passagierkabine verlaufenden Verbindungsgängen (48) zwischen den Kabinengängen (24) mindestens so groß ist wie die Anzahl der sich in einer Sitzkonfiguration (70) befindlichen mittleren Sitzeinheiten (18).

5. Sitzanordnung nach einem der vorhergehenden Ansprüche, **dadurch gekennzeichnet, dass** zumindest eine der Sitzgruppen (10, 12) zumindest eine Umhausungseinheit (52, 54) aufweist, die dazu vorgesehen ist, die Sitzeinheiten (16, 18) der jeweiligen Sitzgruppe (10, 12) zumindest rückwärtig abzuschirmen.

6. Sitzanordnung zumindest nach Anspruch 5, **dadurch gekennzeichnet, dass** zumindest zwei der Sitzeinheiten (16, 18) einer der Sitzgruppen (10, 12) von der zumindest einen Umhausungseinheit (52, 54) zumindest teilweise umgeben werden.

7. Sitzanordnung zumindest nach Anspruch 5 oder 6, **dadurch gekennzeichnet, dass** die zumindest eine Umhausungseinheit (52, 54) einstückig ausgebildet ist.

8. Sitzanordnung nach einem der vorhergehenden Ansprüche, **dadurch gekennzeichnet, dass** zumindest eine der Sitzeinheiten (16, 18) eine Fußauflageeinheit (60) aufweist.

9. Sitzanordnung zumindest nach Anspruch 8, **dadurch gekennzeichnet, dass** die Fußauflageeinheit (60) eine Verstaueinheit (64) aufweist.

10. Sitzanordnung nach einem der vorhergehenden Ansprüche, **dadurch gekennzeichnet, dass** hinter der mittleren Sitzeinheit (18) einer der Sitzgruppen (10, 12), in deren Sitzrichtung (44) gesehen, eine Ablageeinheit (66) angeordnet ist, die dazu vorgesehen ist, eine Ablagefläche (68) für die äußeren Sitzeinheiten (16) derselben Sitzgruppe (10, 12) bereitzustellen.

11. Sitzanordnung nach einem der vorhergehenden Ansprüche, **gekennzeichnet durch** zumindest eine Sitzeinheit (16, 18) die von einer Sitzkonfiguration (70) in eine Liegekonfiguration (72) und umgekehrt verstellbar ist.

## Claims

1. Seat arrangement of a passenger cabin, with at least two seat groups (10, 12), wherein the at least two seat groups (10, 12) are arranged behind each other between two cabin aisles (24) running in parallel to a longitudinal direction (22) of the passenger cabin and each comprise two exterior seat units (16) and exactly one middle seat unit (18), the seat units (16, 18) being set in a sitting configuration (70), wherein a middle seat unit (18) of at least one of the at least two seat groups (10, 12) is arranged offset to at least one of the exterior seat units (16) of the same seat group (10, 12) in the longitudinal direction (22) of the passenger cabin, resulting in each seat unit (16, 18) having an unobstructed access to at least one cabin aisle (24), wherein at least one of the seat units (16, 18) is rotated with respect to the longitudinal direction (22) of the passenger cabin in a seat direction (44), **characterized in that** at least one plane (50), which is arranged perpendicularly to the longitudinal direction (22) of the passenger cabin, intersects with the at least two seat groups (10, 12).

2. Seat arrangement according to claim 1, **characterized in that** the seat directions (44) of the exterior seat units (16) include an angle (W2) of 5° with the longitudinal direction (22) of the passenger cabin.

3. Seat arrangement according to claim 1 or 2, **characterized in that** the middle seat units (18) are oriented in their seat direction (44) in parallel to the longitudinal direction (22) of the passenger cabin.

4. Seat arrangement according to one of the preceding claims, **characterized in that** the number of connecting passages (48) running transversely to the longitudinal direction (22) of the passenger cabin between the cabin aisles (24) is at least equal to a number of middle seat units (18) set in a sitting configuration (70).

5. Seat arrangement according to one of the preceding claims, **characterized in that** at least one of the seat groups (10, 12) comprises at least one housing unit (52, 54), which is configured to screen the seat units (16, 18) of the respective seat group (10, 12) at least rearwards.

6. Seat arrangement according to one of the preceding claims, **characterized in that** at least two of the seat units (16, 18) of one of the seat groups (10, 12) are at least partly encompassed by the at least one housing unit (52, 54).

7. Seat arrangement at least according to claim 5 or 6, **characterized in that** the at least one housing unit (52, 54) is embodied in a one-part implementation.

8. Seat arrangement according to one of the preceding claims, **characterized in that** at least one of the seat units (16, 18) comprises a footrest unit (60).

9. Seat arrangement at least according to claim 8, **characterized in that** the footrest unit (60) comprises a stowage unit (64).

10. Seat arrangement according to one of the preceding claims, **characterized in that** to the rear of the middle seat unit (18) of one of the seat groups (10, 12), viewed in its seat direction (44), a deposit unit (66) is arranged, which is configured to provide a deposit area (68) for the exterior seat units (16) of the same seat group (10, 12).

11. Seat arrangement according to one of the preceding claims, **characterized by** at least one seat unit (16, 18), which is adjustable from a sitting configuration (70) into a lying configuration (72) and vice-versa.

## Revendications

1. Agencement de siège d'une cabine de passager, ayant au moins deux groupes de sièges (10, 12),
les au moins deux groupes de sièges (10, 12) étant agencés, l'un derrière de l'autre, entre deux allées de cabine (24), lesquelles s'étendent parallèlement par rapport à une direction longitudinale (22) de la cabine de passager, et comportant respectivement deux unités de siège extérieures (16) et précisément une unité de siège centrale (18), les unités de siège (16, 18) étant réglées en une configuration assise (70), une unité de siège centrale (18) d'au moins un des groupes de sièges (10, 12) étant disposée en décalage dans la direction longitudinale (22) de la cabine de passager avec au moins une des unités de siège extérieures (16) du même groupe de siège (10, 12), résultant en chacune unité de siège (16, 18) comprenant un accès libre à au moins une allée de cabine (24), et au minimum une des unités de siège (16, 18) étant tournée dans une direction de siège (44) par rapport à la direction longitudinale (22) de la cabine de passager,
**caractérisé en ce qu'**
au moins un plan (50) disposé perpendiculairement à la direction longitudinale (22) de la cabine de passager intersecte les au moins deux groupes de sièges (10, 12).

2. Agencement de siège selon la revendication 1, **caractérisé en ce que** les directions de siège (44) des unités de siège extérieures (16) incluent un angle (W2) de 5° avec la direction longitudinale (22) de la cabine de passager.

3. Agencement de siège selon la revendication 1 ou 2, **caractérisé en ce que** les unités de siège centrales (18) sont orientées dans leur direction de siège (44) parallèlement à la direction longitudinale (22) de la cabine de passager.

4. Agencement de siège selon l'une quelconque des revendications précédentes, **caractérisé en ce que** le nombre d'allées à raccordement (48) s'étendant, entre les allées de cabine (24), transversalement à la direction longitudinale (22) de la cabine de passager est au moins aussi grand que le nombre d'unités de siège (18) situées dans une configuration assise (70).

5. Agencement de siège selon l'une quelconque des revendications précédentes, **caractérisé en ce qu'**au moins une des groupes de sièges (10, 12) comporte au moins une unité de capotage (52, 54) prévue pour blinder les unités de siège (16, 18) du groupe de siège (10, 12) respectif vers l'arrière.

6. Agencement de siège du moins selon la revendication 5, **caractérisé en ce qu'**au moins deux des unités de siège (16, 18) d'un des groupes de sièges (10, 12) sont entourées de l'au moins une unité de capotage (52, 54) au moins partiellement.

7. Agencement de siège du moins selon la revendication 5, **caractérisé en ce que** l'au moins une unité de capotage (52, 54) est implémentée intégralement.

8. Agencement de siège du moins selon la revendication 5 ou 6, **caractérisé en ce qu'**au moins une des unités de siège (16, 18) comporte une unité appuie-pied (60).

9. Agencement de siège du moins selon la revendication 8, **caractérisé en ce que** l'unité appui-pied (60) comporte une unité de rangement (64).

10. Agencement de siège selon l'une quelconque des revendications précédentes, **caractérisé en ce que** derrière de l'unité de siège centrale (18) d'un des groupes de sièges (10, 12), vu dans la direction de siège (44) de ladite unité de siège centrale (18), une unité à dépôt (66) est disposé, laquelle est prévue à fournir une surface bac (68) pour les unités de siège extérieures (16) du même groupe de siège (10, 12).

11. Agencement de siège selon l'une quelconque des revendications précédentes, **caractérisé par** au moins une unité de siège (16, 18), laquelle est ajustable d'une configuration assise (70) à une configuration couchage (72) et vice-versa.
